# EUROPÄISCHE PATENTSCHRIFT

(11) **EP 4 185 505 B1**
(45) Veröffentlichungstag und Bekanntmachung des Hinweises auf die Patenterteilung: **11.09.2024**
(21) Anmeldenummer: 21746010.4
(22) Anmeldetag: 16.07.2021
(51) Int. Cl.: B60W 50/14, B60W 50/04, G01C 21/36

(54) **VERFAHREN UND SYSTEM ZUR VORHERSAGE EINER FUNKTIONSGÜTE EINER FAHRERASSISTENZFUNKTION**
METHOD AND SYSTEM FOR PREDICTING THE FUNCTIONAL QUALITY OF A DRIVER ASSISTANCE FUNCTION
PROCÉDÉ ET SYSTÈME POUR PRÉDIRE UNE QUALITÉ DE FONCTIONNEMENT D'UNE FONCTION D'AIDE À LA CONDUITE

(30) Priorität: 24.07.2020 DE 102020119625
(43) Veröffentlichungstag der Anmeldung: 31.05.2023
(73) Patentinhaber: Bayerische Motoren Werke Aktiengesellschaft, 80809 München (DE)
(72) Erfinder: HELMER, Thomas, 80804 München (DE)
(86) Internationale Anmeldenummer: PCT/EP2021/069986
(87) Internationale Veröffentlichungsnummer: WO 2022/017982

(56) Entgegenhaltungen:
- EP-A1- 3 569 465
- DE-A1- 102011 055 495
- DE-A1- 102011 082 398
- DE-A1- 102012 222 855

## Beschreibung

Die Erfindung betrifft ein Verfahren und ein System zur Vorhersage einer Funktionsgüte einer Fahrerassistenzfunktion.

Aus dem Stand der Technik sind verschiedene Fahrerassistenzsysteme (FAS) bekannt, welche die Sicherheit und/oder den Komfort für einen Fahrer bzw. Fahrzeuginsassen erhöhen können. Fahrerassistenzsysteme können z. B. im Rahmen des teilautomatisierten Fahrens (TAF), des hochautomatisierten Fahrens (HAF) oder des vollautomatisierten Fahrens (VAF) bestimmte Fahraufgaben übernehmen oder das Fahrzeug sogar autonom steuern.

Beispielsweise kann ein Fahrspurassistent dazu eingerichtet sein, das Fahrzeug zwischen Fahrbahnmarkierungen zu halten. Die Markierungen können dabei z.B. mittels einer Kamera abgetastet und automatisch erkannt werden. Andere Fahrerassistenzsysteme greifen nicht direkt in die Führung des Fahrzeugs ein, sondern stellen lediglich bestimmte Signalisierungen, wie z. B. Warnsignale, bereit, wodurch dem Fahrer die sichere Führung des Fahrzeugs erleichtert wird.

Beispiele für Fahrerassistenzsysteme, die automatisch in die Führung des Fahrzeugs eingreifen, sind Längsführungsassistenzsysteme, Querführungsassistenzsysteme sowie Assistenzsysteme mit gekoppelter Längs- und Querführung. Als bekannte Längsführungsassistenzsysteme sind z. B. eine automatische Geschwindigkeitsbegrenzung, eine automatische Geschwindigkeitsregelung (z. B. das bei Fahrzeugen der BMW Group so bezeichnete Dynamic Cruise Control - DCC) oder adaptive Geschwindigkeitsregelung (Adaptive Cruise Control bzw. Active Cruise Control - ACC) zu nennen. Querführungsassistenzsysteme, Längsführungsassistenzsysteme oder gekoppelte Lenks- und Querführungsassistenzsysteme können z. B. eine sogenannte Hands-off-Funktionalität bzw. Feet-off-Funktionalität realisieren, welche dem Fahrer bestimmte Lenk- bzw. Pedalbetätigungsaufgaben abnehmen.

Für derartige Fahrassistenzsysteme sind verschiedene Betriebsmodi bekannt, welche mitunter auch ein "Übertreten" durch den Fahrer zu lassen. Beispielsweise kann vorgesehen sein, dass der Fahrer eine ACC-Funktion mit dem Gaspedal übertreten und so vorübergehend die Längsführung selbst übernehmen kann. Geht der Fahrer dann wieder vom Gaspedal, so regelt die ACC-Funktion weiter auf eine Setzgeschwindigkeit bzw. auf ein Vorderfahrzeug.

Ferner sind Parkmanöverassistenten und automatische Rückfahrassistenten bekannt, wobei letztere es ermöglichen, einen bestimmten Abschnitt eines (bei geringer Geschwindigkeit zurückgelegten) Zufahrtswegs abzuspeichern und diesen auf Wunsch automatisch wieder zurückzufahren.

Beispiele für Fahrerassistenzsysteme, die in bestimmten Situationen automatisch eine Warnfunktion bereitstellen (und in einigen Ausprägungen ggf. zusätzlich einen Lenkeingriff und/oder einen Eingriff in die Längsführung umfassen können), sind Spurwechselassistenten sowie Assistenzsysteme zur Frontkollisionswarnung, Personenwarnung, Seitenkollisionswarnung, Querverkehrswarnung oder Spurverlassenswarnung.

In dem vorliegenden Dokument wird unter einem Fahrerassistenzsystem allgemein ein System verstanden, welches durch Implementation in Software und/oder Hardware dazu ausgebildet ist, in Abhängigkeit von durch ein oder mehrere Sensoren ermittelte Daten eine für den Fahrer bzw. Fahrzeuginsassen z. B. unter Sicherheits- oder Komfortaspekten relevante Signalisierung, wie z. B. ein Warnsignal, auszugeben und/oder in die Führung des Fahrzeugs einzugreifen bzw. die Führung des Fahrzeugs - dauerhaft oder zumindest zeitweise - vollständig zu übernehmen.

Fahrerassistenzsysteme schalten sich üblicherweise ab, wenn bestimmte Bedingungen für ihren Betrieb nicht mehr erfüllt sind. Diese Betriebsbedingungen, die für einen sicheren und zuverlässigen Einsatz eines FAS gegeben sein müssen, können beispielsweise ein aktuelles Fahrzeugumfeld und insbesondere einen Straßenverlauf betreffen. So deaktiviert sich z. B. ein Lenk- und Spurführungsassistent, sobald in einer engen Kurve zu viel Lenkmoment zur Aufrechterhaltung der Trajektorie notwendig wird. Dies tritt häufig und reproduzierbar etwa bei Autobahnauffahrten ein. Weitere Situationen, in denen es typischerweise zu einer Deaktivierung eines FAS kommen kann sind das Überfahren von Kreuzungen, das Durchfahren von Kreisverkehren etc.

In der Regel wird vor dem (manchmal auch als "Abwerfen" bezeichneten) Deaktivieren eines FAS eine Übernahmeaufforderung (Englisch: take-over request - TOR) an den Fahrer des Fahrzeugs ausgelöst. Dies bedeutet, dass in einer für den Fahrer wahrnehmbaren Weise (d.h. beispielsweise akustisch und/oder optisch) ein Hinweis an den Fahrer ausgegeben wird, dass er demnächst die Steuerung des Fahrzeugs wenigstens teilweise manuell übernehmen muss, um hierdurch ein sicheres Deaktivieren des Fahrerassistenzsystems oder einer bestimmten Fahrerassistenzfunktion des FAS vorzubereiten.

Die Fahrerzufriedenheit hängt im Allgemeinen von der Verfügbarkeit und der Leistungsfähigkeit der FAS seines Fahrzeugs ab. So ist es für den Fahrer tendenziell unangenehm, wenn es häufig zu Abwürfen eines FAS kommt, und zwar insbesondere, wenn er von einer Deaktivierung eines FAS überrascht wird, sodass er z. B. kurzfristig und ggf. sehr energisch manuell in die Lenkung und/oder in die Längsführung des Fahrzeugs eingreifen muss.

Die DE 10 2011 082 398 A1 schlägt ein Verfahren zum Darstellen eines Navigationshinweises vor, wobei anhand einer Fahrroute angezeigt wird, in welchem Abschnitt einer Fahrroute eine Zusatzinformation für ein Fahrerassistenzsystem eines Fahrzeugs vorhanden ist. Dabei kann eine Recheneinheit des Fahrzeugs insbesondere überprüfen, ob das Fahrerassistenzsystem unter Berücksichtigung der Zusatzinformation verfügbar ist.

Die DE 10 2012 222 855 A1 beschreibt ein Fahrerassistenzsystem, das eingerichtet ist, Geodaten mit für die Assistenzfunktion relevanten Attributen anzureichern. Diese Attribute können in positionsabhängiger Weise gespeichert werden. Dadurch kann erreicht werden, dass, wenn eine Position, für die ein Attribut vorliegt, durch das gleiche Fahrzeug oder durch ein anderes Fahrzeug angefahren wird, das Attribut zur vorausschauenden Steuerung der Assistenzfunktion verwendet werden kann. Es ist dadurch vorab bekannt, mit welcher Qualität das Fahrerassistenzsystem funktionieren wird. Insbesondere kann das Fahrerassistenzsystem bereits im Vorfeld ermitteln, ob eine bestimmte Assistenzfunktion mit ausreichender Zuverlässigkeit bereitgestellt werden kann. Der Fahrer kann dadurch im Voraus auf mögliche Einschränkungen bei der Assistenzfunktion hingewiesen werden. Alternativ oder zusätzlich kann die Assistenzfunktion deaktiviert werden bzw. ihre Aktivierbarkeit kann unterdrückt werden, wenn die zu erwartende Performance der Assistenzfunktion unterhalb eines Performance-Schwellwerts liegt.

Es ist Aufgabe der vorliegenden Erfindung, ein Verfahren und ein System bereitzustellen, welche die Nachteile im Stand der Technik zumindest teilweise überwinden.

Die Aufgabe wird durch Verfahren bzw. ein System gemäß den unabhängigen Patentansprüchen gelöst. Vorteilhafte Ausführungsformen sind in den abhängigen Ansprüchen angegeben.

Ein erster Aspekt der Erfindung betrifft ein Verfahren zur Vorhersage einer Funktionsgüte einer Fahrerassistenzfunktion.

Ein erster Schritt des erfindungsgemäßen Verfahrens ist das Erfassen, mittels eines ersten Fahrzeugs, von Informationen, die eine Funktionsgüte einer Fahrerassistenzfunktion kennzeichnen oder die für die Funktionsgüte der Fahrerassistenzfunktion relevant sind. Unter einem Fahrzeug ist im Rahmen der vorliegenden Schrift grundsätzlich jegliche Fahrzeugart zu verstehen ist, mit der Personen und/oder Güter fortbewegt werden können. Mögliche Beispiele dafür sind: Kraftfahrzeuge, Lastkraftwagen, Landfahrzeuge, Busse, Fahrkabinen, Seilbahnkabinen, Aufzugkabinen, Schienenfahrzeuge, Wasserfahrzeuge (z. B. Schiffe, Boote, U-Boote, Tauchglocken, Hovercraft, Tragflächenboote), Luftfahrzeuge (Flugzeuge, Hubschrauber, Bodeneffektfahrzeuge, Luftschiffe, Ballone).

Insbesondere kann das Fahrzeug ein Kraftfahrzeug sein. Ein Kraftfahrzeug in diesem Sinne ist ein Landfahrzeug, das durch Maschinenkraft bewegt wird, ohne an Bahngleise gebunden zu sein. Ein Kraftfahrzeug in diesem Sinne kann z. B. als Kraftwagen, Kraftrad oder Zugmaschine ausgebildet sein.

Erfindungsgemäß ist das erste Fahrzeug mit einer Fahrerassistenzfunktion ausgestattet. Es können auch mehrere solche ersten Fahrzeuge vorgesehen und an dem hier beschriebenen Verfahren beteiligt sein, vorzugsweise eine ganze Flotte.

Die erfassten Informationen umfassen empirische Daten über eine mittels des ersten Fahrzeugs erfahrene Funktionsgüte der Fahrerassistenzfunktion. Dies kann z.B. eine Leistungsfähigkeit oder Verfügbarkeit der Fahrerassistenzfunktion je nach situationsabhängigen Bedingungen, wie z.B. der Witterung, einer Umgebungshelligkeit, einer möglichen "Blendung" von Sensoren, einer Krümmung der Fahrbahn oder einer Fahrgeschwindigkeit betreffen. Dabei können die erfassten Informationen insbesondere auch Daten aus einer Umfeldsensorik des ersten Fahrzeugs (z.B. Wetter- oder Geschwindigkeitsdaten) und/oder aus einem von dem ersten Fahrzeug verwendeten Umfeldmodell umfassen. Mit anderen Worten können die ersten Informationen direkt oder indirekt etwas über eine situationsabhängige Funktionsgüte, insbesondere über eine Verfügbarkeit, der Fahrerassistenzfunktion aussagen. Ferner können die ersten Informationen Fahrzeugdaten (z.B. betreffend einen Hardware- und/oder Softwarestand) des ersten Fahrzeugs umfassen.

Ein weiterer Schritt ist das Bestimmen, in Abhängigkeit von den erfassten Informationen und mittels einer Recheneinrichtung, einer für einen bestimmten Streckenabschnitt prognostizierten Funktionsgüte der Fahrerassistenzfunktion für ein zweites Fahrzeug. Das zweite Fahrzeug kann mit dem ersten Fahrzeug identisch sein (d.h. es kann das erste Fahrzeug sein) oder von diesem verschieden, d.h. ein anderes Fahrzeug als das erste Fahrzeug sein.

Ein weiterer Schritt ist das Ausgeben, mittels einer Ausgabevorrichtung, einer Information über die prognostizierte Funktionsgüte in einer für einen Fahrzeuginsassen des zweiten Fahrzeugs wahrnehmbaren Weise. Beispielsweise kann diese Information mittels einer visuellen Anzeige und/oder mittels einer akustischen Meldung ausgegeben werden. Bevorzugt erfolgt das Ausgeben der Information über die prognostizierte Funktionsgüte anhand einer grafisch dargestellten Karte, welche den Streckenabschnitt umfasst.

Die Anzeigevorrichtung ist beim Ausgeben der Information über die prognostizierte Funktionsgüte in einer für einen Fahrzeuginsassen des zweiten Fahrzeugs wahrnehmbaren Weise in dem zweiten Fahrzeug oder an dem zweiten Fahrzeug angeordnet.

Die Anzeigevorrichtung kann beispielsweise ein im Cockpit vorgesehener Bildschirm oder eine Projektionsanordnung, etwa in Form eines Touchscreens oder eines Head-Up-Displays, sein. Dabei kann es sich z. B. um eine Anzeigevorrichtung eines Bordcomputers des zweiten Fahrzeugs handeln, wobei zusätzlich zu den Nutzungsdaten ggf. auch andere Informationen, wie z. B. eine aktuelle Fahrgeschwindigkeit, eine aktuelle Drehzahl oder Navigationsanweisungen mittels der Anzeigevorrichtung angezeigt werden können. Es kann z. B. vorgesehen sein, dass der Fahrer die visualisierten Informationen innerhalb eines mittels einer Software implementierten Portals und/oder in einer App und/oder in einem Widget und/oder in einem Applet über ein entsprechendes Menü aufrufen kann.

Alternativ kann jedoch auch eine von dem zweiten Fahrzeug entfernbare Anzeigevorrichtung, wie z. B. in Form eines Mobilgeräts, zum Ausgeben der Information über die prognostizierte Funktionsgüte in einer für einen Fahrzeuginsassen des zweiten Fahrzeugs wahrnehmbaren Weise vorgesehen sein. Mit anderen Worten können Informationen über die prognostizierte Funktionsgüte z.B. auf einem Mobilgerät, wie z. B. einem Smartphone oder Notebook angezeigt werden. Dabei kann der Fahrer beispielsweise über eine spezielle Fahrzeug-App von seinem Mobilgerät oder über einen Kunden-Account über ein Web-Portal auf die Informationen zugreifen.

Darüber hinaus kann ein Mobilgerät oder ein - z.B. außerhalb des zweiten Fahrzeugs befindlicher - Desktop-Computer auch als eine weitere (zusätzliche) Anzeigevorrichtung für die Nutzungsdaten dienen.

Die Information über die prognostizierte Funktionsgüte kann insbesondere eine Prognose umfassen, ob die Fahrerassistenzfunktion in dem betreffenden Streckenabschnitt (wahrscheinlich) verfügbar sein wird. Für den Fahrer des zweiten Fahrzeugs ergibt sich dabei der Vorteil, dass er ein konsistentes Bild der Funktionsverfügbarkeit erhält und sich komfortabel im Voraus darauf einstellen kann. Ferner kann der Fahrer durch das erfindungsgemäße Verfahren sein konsistentes Bild der Funktionsverfügbarkeit sukzessive ausbauen und es im Laufe der Zeit immer besser erlernen. Unangenehme Überraschungen, etwa durch eine kurzfristige Deaktivierung einer Fahrerassistenzfunktion, können hierdurch vermieden werden. Die Informationen können z.B. auch positive Empfehlung umfassen, die darauf hinweisen, dass die Fahrerassistenzfunktion in dem betreffenden Streckenabschnitt (wahrscheinlich) besonders gut funktioniert.

Verfahrensgemäß ist vorgesehen, dass das Erfassen der Informationen unter Zugriff auf ein Steuerungssystem des ersten Fahrzeugs erfolgt, wobei gemäß einigen Ausführungsformen ggf. zusätzlich durch den Fahrer auch manuelle Eingaben vorgenommen werden können. Bei dem Steuerungssystem kann es sich insbesondere um ein Steuerungssystem handeln, welches die Fahrerassistenzfunktion des ersten Fahrzeugs steuert. Dabei soll der Begriff Steuerungssystem vorliegend so verstanden werden, dass beispielsweise entsprechende logische Recheneinrichtungen wie einen oder mehrere Mikrocontroller oder Prozessoren, aber auch ggf. eine Umfeldsensorik einschließt.

Alternativ oder zusätzlich zu dem Merkmal, wonach das Erfassen der Informationen unter Zugriff auf ein Steuerungssystem des ersten Fahrzeugs erfolgt, ist verfahrensgemäß vorgesehen, dass das Bestimmen der prognostizierten Funktionsgüte unter Zugriff auf Daten, die von einem Steuerungssystem des zweiten Fahrzeugs bereitgestellt werden, erfolgt.

Vorzugsweise erfolgt das Bestimmen der prognostizierten Funktionsgüte unter Berücksichtigung von Informationen, die wenigstens ein Element aus der folgenden Auflistung betreffen: Einen Fahrbahnverlauf in dem Streckenabschnitt, wie z.B. eine Fahrbahnkrümmung, wie sie sich z.B. gemäß digitalen Karteninformationen und/oder gemäß mittels einer Umfeldsensorik des zweiten Fahrzeugs erfassten Daten darstellt; einen Softwarestand des zweiten Fahrzeugs (insbesondere eines Steuerungssystems des zweiten Fahrzeugs, das für die Fahrerassistenzfunktion relevant ist); eine Hardware des zweiten Fahrzeugs; ein Umfeldmodell, das von dem Steuerungssystem des zweiten Fahrzeugs bereitgestellt wird; mittels einer Umfeldsensorik des zweiten Fahrzeugs erfasste Informationen, wie z.B. Witterungsverhältnisse, Helligkeit, oder Blendung. Weiterhin können beispielsweise auch eine geplante Geschwindigkeit und/oder eine Geschwindigkeitsbegrenzung, die z.B. gemäß digitalen Karteninformationen oder gemäß einer Verkehrszeichenerkennung in dem Streckenabschnitt besteht, beim Bestimmen der prognostizierten Funktionsgüte berücksichtigt werden.

Bei einer vorteilhaften Ausführungsform wird eine Information über die prognostizierte Funktionsgüte einem Steuerungssystem des zweiten Fahrzeugs bereitgestellt. Insbesondere kann das Verfahren ein (automatisches) Steuern der Fahrerassistenzfunktion des zweiten Fahrzeugs in Abhängigkeit von der prognostizierten Funktionsgüte umfassen. Mit dem Steuern der Fahrerassistenzfunktion ist dabei eine gezielte Beeinflussung der Fahrerassistenzfunktion, wie z.B. ein (ggf. teilweises) Freigeben, (ggf. teilweises) Deaktivieren, Einschränken oder Parametrieren gemeint, wobei dies insbesondere gezielt mit Bezug auf den betreffenden Streckenabschnitt erfolgen kann.

Im Einklang mit dem Vorstehenden liegt es auch im Rahmen der Erfindung, dass das Verfahren ferner ein automatisches Deaktivieren der Fahrerassistenzfunktion des zweiten Fahrzeugs vor dem Befahren des Streckenabschnitts umfassen kann, falls die Bestimmung ergeben hat, dass die Funktionsgüte (z.B. hinsichtlich eines oder mehrerer vorbestimmter Kriterien, die z.B. die Sicherheit oder Zuverlässigkeit der Fahrerassistenzfunktion betreffen) nicht ausreicht.

Gemäß einer Ausführungsform werden die erfassten Informationen in einem von dem ersten Fahrzeug und von dem zweiten Fahrzeug beabstandeten Backend gespeichert und verarbeitet. Das Backend kann z.B. eine oder mehrere Recheneinrichtungen sowie eine oder mehrere Speichereinrichtungen, umfassen. Demgemäß kann z.B. vorgesehen sein, dass die erfassten Informationen - vorzugsweise in anonymisierter Form - an einen außerhalb des ersten Fahrzeugs und des zweiten Fahrzeugs befindlichen Backend-Server übermittelt werden. Das Backend kann z.B. durch den Fahrzeughersteller betrieben werde. In dem Backend können z.B. im Laufe der Zeit immer mehr für die Prognose der Funktionsgüte der Fahrerassistenzfunktion relevante Informationen, die z.B. auf erfasste Informationen einer ganzen Fahrzeugflotte zurückgehen, aggregiert werden. Beispielsweise kann ein selbstlernender Algorithmus auf dieser Grundlage eine immer zuverlässigere Prognose der Funktionsgüte ermöglichen. Ein solcher selbstlernender Algorithmus kann z.B. klassisch deterministisch sein und/oder mittels auf einem oder mehreren neuronalen Netzen beruhen. Gemäß einem zweiten Aspekt der Erfindung wird ein System zur Vorhersage einer Funktionsgüte einer Fahrerassistenzfunktion vorgeschlagen. Das System umfasst eine Recheneinrichtung, die eingerichtet ist: zum Empfangen von Informationen, die eine Funktionsgüte einer Fahrerassistenzfunktion kennzeichnen oder für die Funktionsgüte der Fahrerassistenzfunktion relevant sind, wobei die Informationen mittels eines ersten Fahrzeugs erfasst worden sind; und zum Bestimmen, in Abhängigkeit von den erfassten Informationen, einer für einen Streckenabschnitt prognostizierten Funktionsgüte der Fahrerassistenzfunktion für ein zweites Fahrzeug, welches mit dem ersten Fahrzeug identisch oder von diesem verschieden ist. Ferner umfasst das System eine Ausgabevorrichtung zum Ausgeben einer Information über die prognostizierte Funktionsgüte in einer für einen Fahrzeuginsassen des zweiten Fahrzeugs wahrnehmbaren Weise. Das System ist ausgelegt, Informationen zu empfangen, die empirische Daten über eine mittels des ersten Fahrzeugs erfahrene Funktionsgüte der Fahrerassistenzfunktion umfassen.

Ein Verfahren nach dem ersten Aspekt der Erfindung kann beispielsweise mittels eines Systems nach dem zweiten Aspekt der Erfindung ausgeführt werden. Dementsprechend gelten die Ausführungen zum erfindungsgemäßen Verfahren nach dem ersten Aspekt der Erfindung in entsprechender Weise auch für das System nach dem zweiten Aspekt der Erfindung und umgekehrt. Ebenso entsprechen vorteilhafte Ausführungsbeispiele des erfindungsgemäßen Verfahrens den hier beschriebenen vorteilhaften Ausführungsbeispielen des erfindungsgemäßen Systems und umgekehrt.

Gemäß einer Ausführungsform umfasst ein erfindungsgemäßes System ein außerhalb des ersten Fahrzeugs und des zweiten Fahrzeugs angeordnetes Backend. Dabei kann das Backend die Recheneinrichtung des Systems umfassen. Ferner kann das Backend eine Speichereinrichtung zum Speichern der erfassten Informationen und/oder von daraus abgeleiteten Informationen, wie z.B. Informationen über eine prognostizierte Funktionsgüte der Fahrerassistenzfunktion, umfassen.

Das System kann ferner eine Übertragungsvorrichtung zum Übertragen der erfassten Informationen vom ersten Fahrzeug an das Backend und/oder eine Übertragungsvorrichtung zum Übertragen von Informationen über eine prognostizierte Funktionsgüte von dem Backend an das zweite Fahrzeug umfassen. Die Datenübermittlung erfolgt dabei bevorzugt kabellos (z. B. über Mobilfunk oder WiFi). So kann für die Übermittlung der betreffenden Informationen von dem ersten Fahrzeug an das Backend bzw. von dem Backend an das zweite Fahrzeug beispielsweise jeweils eine Mobilfunkschnittstelle gemäß einem 3G-, 4G- oder 5G-Mobilfunkstandard genutzt werden.

In Übereinstimmung mit dem Vorstehenden ermöglichen einige Ausführungsformen eines erfindungsgemäßen Verfahren bzw. eines erfindungsgemäßen Systems eine selbstlernende Prognosefunktion für eine Funktionsgüte einer Fahrerassistenzfunktion. Dabei werden beispielsweise mittels drahtloser Kommunikation von einer Fahrzeugflotte Daten über Funktionsdeaktivierungen samt den jeweiligen aktuellen Positionen, Richtungen, Geschwindigkeiten und Beschleunigungen sowie ggf. weiteren Umgebungsparameter (z.B. Wetter, Uhrzeit, Datum etc.) in einem Backend gesammelt. Auf der Basis dieser Informationen wird z.B. kontinuierlich und live eine Karte mit den für die Fahrerassistenzfunktion nicht beherrschbaren räumlichen-zeitlichen sowie weiteren situativen Parametern erstellt. Dies findet zentral im Backend statt und nutzt den Input der gesamten entsprechend ausgestattete Fahrzeugflotte. Die so gelernten Modelle zur Funktionsverfügbarkeit können mittels drahtloser Kommunikation wieder jedem einzelnen Fahrzeug der Flotte zur Verfügung gestellt werden und dort ggf. eine frühzeitige, komfortable und transparente Deaktivierung der Fahrerassistenzfunktion bewirken. Beispielsweise kann die automatische Deaktivierung bereits deutlich vor einer bestimmten Autobahnauffahrt erfolgen, wenn bei einigen Fahrzeugen der Flotte zuvor im Scheitel er Autobahnauffahrt ein Abwurf vorgekommen ist. Die Fahrer erhalten auf diese Weise ein konsistentes Bild der Funktionsverfügbarkeit und können sich komfortabel darauf einstellen.

Ein weiterer Vorteil ist, dass sich das Verhalten der Fahrzeuge dynamisch an Änderungen (z.B. einer Straßenverlaufs oder auch des eigenen Hardware- oder Softwarestands) anpassen kann.

Das erfindungsgemäße Verfahren ist bei einer Vielzahl von Fahrerassistenzfunktionen, wie z.B. Lenk- und Spurführungsassistenten, ACC und Parkassistenten, anwendbar.

Die Erfindung wird nun anhand von Ausführungsbeispielen sowie unter Bezugnahme auf die beigefügten Zeichnungen näher erläutert.
- Fig. 1: zeigt schematisch und beispielhaft ein System zur Vorhersage einer Funktionsgüte einer Fahrerassistenzfunktion.
- Fig. 2: zeigt ein schematisches Ablaufdiagramm eines Verfahrens zur Vorhersage einer Funktionsgüte einer Fahrerassistenzfunktion gemäß einer beispielhaften Ausführungsform.
- Fig. 3: zeigt ein schematisches Ablaufdiagramm einer Weiterbildung des Verfahrens aus Fig. 2.

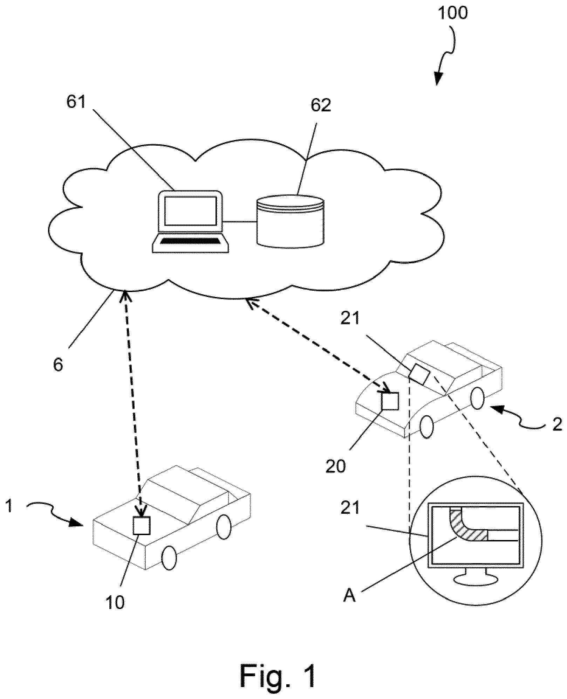

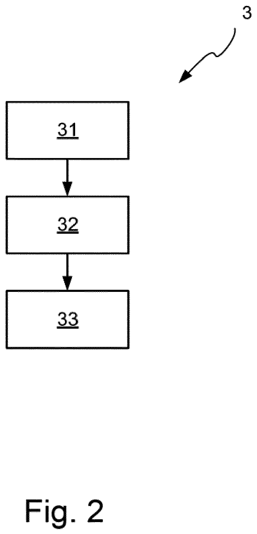

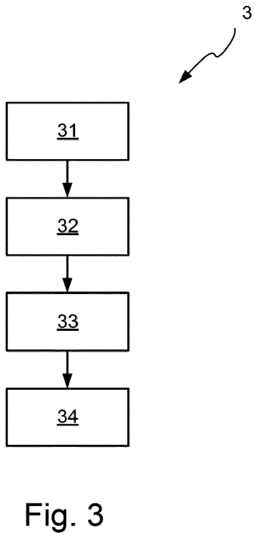

Die Fig. 1 bezieht sich auf ein Beispielszenario mit zwei Fahrzeugen 1, 2, in welchem ein erfindungsgemäßes Verfahren 3 mittels eines Systems 100 zur Vorhersage einer Funktionsgüte einer Fahrerassistenzfunktion ausgeführt wird. Im Folgenden wird die Erfindung exemplarisch anhand dieses Beispielszenarios erläutert, wobei sogleich auch auf die Verfahrensschritte 31-34 gemäß Fig. 2 und 3 Bezug genommen wird, welche jeweils ein schematisches Ablaufdiagramm einer beispielhaften Ausführungsform des Verfahrens 3 zeigen.

Die Fig. 1 zeigt ein erstes Fahrzeug 1, das mit einer Fahrerassistenzfunktion, wie z. B. einem Lenk- und Spurführungsassistenten, ausgestattet ist.

Während der Fahrt werden unter Zugriff auf ein Steuerungssystem 10 der Fahrerassistenzfunktion des ersten Fahrzeugs 1 Informationen erfasst, die eine Funktionsgüte der Fahrerassistenzfunktion kennzeichnen und/oder die für die Funktionsgüte der Fahrerassistenzfunktion relevant sind (Schritt 31 in Fig. 2 und 3). Die erfassten Informationen umfassen dabei empirische Daten über eine mittels des ersten Fahrzeugs 1 erfahrene Funktionsgüte der Fahrerassistenzfunktion und/oder über Bedingungen (z.B. betreffend die Witterung), die für die Funktionsgüte relevant sind.

Beispielsweise wird erfasst, ob die Fahrerassistenzfunktion in einem bestimmten von dem ersten Fahrzeug 1 durchfahrene Kurve zu einem bestimmten Zeitpunkt verfügbar war oder ob sie in oder vor der Kurve ganz oder teilweise deaktiviert wurde (d.h. abgeworfen hat, z.B. weil die Kurve bei der gefahrenen Geschwindigkeit für eine automatisierte Querführung zu scharf war). Zusätzlich können die erfassten Informationen weitere Parameter, die z. B. Witterungsbedingungen, eine Fahrgeschwindigkeit oder einen Softwarestand des Fahrzeugs 1 betreffen, beinhalten.

Die erfassten Informationen werden mittels einer Mobilfunkverbindung von dem ersten Fahrzeug 1 an ein Backend 6 übertragen. Das Backend 6 umfasst eine Recheneinrichtung 61 und eine Speichereinrichtung 62, welche eine Verarbeitung bzw. Speicherung der erfassten Informationen ermöglichen. Die Recheneinrichtung 61 empfängt die von dem ersten Fahrzeug 1 erfassten Informationen. Die Speichereinrichtung 62 kann dabei z. B. als Speicher oder Zwischenspeicher für erfassten Informationen oder für in der Folge daraus abgeleitete Informationen dienen.

Zusätzlich zu den von dem ersten Fahrzeug 1 erfassten Informationen können noch viele weitere (nicht dargestellte) Fahrzeuge dem Backend 6 entsprechende Informationen liefern. Mit anderen Worten können in dem Backend 6 erfasste Informationen von einer ganzen Fahrzeugflotte aggregierte werden.

In Abhängigkeit von den erfassten Informationen bestimmt die Recheneinrichtung 61 in dem Backend 6 eine für einen bestimmten Streckenabschnitt A prognostizierte Funktionsgüte der Fahrerassistenzfunktion für ein von dem ersten Fahrzeug 1 verschiedenes zweites Fahrzeug 2 (Schritt 32 in Fig. 2 und 3). Der Streckenabschnitt A kann beispielsweise die oben erwähnte von dem ersten Fahrzeug 1 durchfahrene Kurve sein. Insbesondere kann der Streckenabschnitt A ein Streckenabschnitt sein, welchen das zweite Fahrzeug 2 entsprechend einer aktuellen Routenplanung demnächst befahren wird.

Die so bestimmten Informationen über die prognostizierte Funktionsgüte der Fahrerassistenzfunktion können insbesondere eine Prognose umfassen, ob die Fahrerassistenzfunktion in dem Streckenabschnitt A verfügbar sein wird. Beispielsweise kann die Recheneinrichtung 61 mittels eines selbstlernenden Algorithmus aufgrund der von der Fahrzeugflotte erfassten Informationen im Laufe der Zeit eine zunehmend verlässliche Prognose über die situationsabhängige Verfügbarkeit der Fahrerassistenzfunktion bereitstellen.

Die Informationen über die prognostizierte Funktionsgüte der Fahrerassistenzfunktion werden mittels einer Mobilfunkverbindung von dem Backend 6 an das zweite Fahrzeug 2 übertragen und mittels einer Ausgabevorrichtung 21 an einen Fahrzeuginsassen des zweiten Fahrzeugs 2 ausgegeben (Schritt 33 in Fig. 2 und 3).

Bei dem vorliegenden Ausführungsbeispiel umfasst die Ausgabevorrichtung 21 einen Bildschirm, auf welchem der Streckenabschnitt A grafisch dargestellt und durch Schraffierung markiert ist. Diese Markierung kann beispielsweise bedeuten, dass die Fahrerassistenzfunktion unter den gegebenen Bedingungen (z.B. aktuelle Witterung, Fahrgeschwindigkeit und Softwarestand der Fahrerassistenzfunktion des zweiten Fahrzeugs 2) gemäß der Prognose in dem Streckenabschnitt A nicht verfügbar sein wird. Hierdurch ist der Fahrer des zweiten Fahrzeugs 2 bereits in Voraus darüber im Bilde, dass vor dem Streckenabschnitt A eine Übernahmeaufforderung abgesetzt wird.

Die Information über die prognostizierte Funktionsgüte können zusätzlich auch direkt einem Steuerungssystem 20 der Fahrerassistenzfunktion des zweiten Fahrzeugs 2 bereitgestellt werden. In diesem Fall kann gemäß einer Variante des Verfahrens, die in Fig. 3 schematisch veranschaulicht ist, ein weiterer Schritt 34 vorgesehen sein, in welchem die Fahrerassistenzfunktion des zweiten Fahrzeugs 2 in Abhängigkeit von der prognostizierten Funktionsgüte gesteuert wird. Das bedeutet z.B., dass mittels des Steuerungssystems 20 eine automatische Freigabe, Deaktivierung, Einschränkung oder Parametrisierung der Fahrerassistenzfunktion in Abhängigkeit von der prognostizierten Funktionsgüte erfolgen kann. Insbesondere kann die Fahrerassistenzfunktion des zweiten Fahrzeugs 2 vor dem Befahren des Streckenabschnitts A automatisch deaktiviert werden, falls die Bestimmung 32 ergeben hat, dass die prognostizierte Funktionsgüte nicht ausreicht. Wenn also z.B. aufgrund der prognostizierten Funktionsgüte ohnehin mit einem Abwurf der Fahrerassistenzfunktion im Bereich des Streckenabschnitts A zu rechnen ist, kann ggf. eine frühzeitigere automatische Deaktivierung erfolgen. Dadurch wird einer unangenehmen Überraschung des Fahrers durch ein kurzfristiges Deaktivieren der Fahrerassistenzfunktion vorgebeugt.

Bereits das Bestimmen 32 der prognostizierten Funktionsgüte kann unter Zugriff auf (und unter Berücksichtigung von) Daten erfolgen, die von dem Steuerungssystem 20 des zweiten Fahrzeugs 2 bereitgestellt werden. Solche Daten können z.B. Informationen über einen Softwarestand und/oder einen Hardwarestand des zweiten Fahrzeugs 2 betreffen. Ferner können solche Daten Informationen über ein Umfeldmodell, das von dem Steuerungssystem 20 des zweiten Fahrzeugs 2 bereitgestellt wird, betreffen. Zudem können solche Daten Informationen beinhaltet, die mittels einer Umfeldsensorik des zweiten Fahrzeugs 2 erfasst worden sind (z.B. betreffend Witterung, Helligkeit, Fahrbahnverlauf, Verkehrsschilder etc.).

Bei dem hier beschriebenen Ausführungsbeispiel ist das zweite Fahrzeug 2 von dem ersten Fahrzeug 1 verschieden. Bei anderen Ausführungsbeispielen kann das zweite Fahrzeug 2 jedoch auch mit dem ersten Fahrzeug 1 identisch sein. In einem solchen Fall können die erfassten Informationen z. B. ganz ohne Einbeziehung eines Backends lokal in dem Fahrzeug gespeichert und verarbeitet werden. Dabei profitiert das Fahrzeug zwar nicht von den gewonnenen Erkenntnissen anderer Fahrzeuge; das Fahrzeug kann jedoch aufgrund seiner eigens erfassten Daten im Laufe der Zeit dennoch zunehmend verlässliche Informationen über eine prognostizierte Funktionsgüte der Fahrerassistenzfunktion sammeln, welche dem Fahrerlebnis der Fahrzeuginsassen zugutekommen. Was die Anzeige und die weitere Verwertung der Informationen über die prognostizierte Funktionsgüte anbetrifft, unterscheidet sich dieser Ausführungsvariante nicht von der Ausführungsvariante mit zwei verschiedenen Fahrzeugen 1, 2, so dass insoweit auf die obenstehende Beschreibung verwiesen werden kann.

## Patentansprüche

1. Verfahren (3) zur Vorhersage einer Funktionsgüte einer Fahrerassistenzfunktion, umfassend die Schritte:
- Erfassen (31), mittels eines ersten Fahrzeugs (1), von Informationen, die eine Funktionsgüte einer Fahrerassistenzfunktion kennzeichnen oder für die Funktionsgüte der Fahrerassistenzfunktion relevant sind;
- Bestimmen (32), in Abhängigkeit von den erfassten Informationen und mittels einer Recheneinrichtung (61), einer für einen Streckenabschnitt (A) prognostizierten Funktionsgüte der Fahrerassistenzfunktion für ein zweites Fahrzeug (2), welches mit dem ersten Fahrzeug (1) identisch oder von diesem verschieden ist; und
- Ausgeben (33), mittels einer Ausgabevorrichtung (21), einer Information über die prognostizierte Funktionsgüte in einer für einen Fahrzeuginsassen des zweiten Fahrzeugs (2) wahrnehmbaren Weise;
wobei
- das Erfassen (31) der Informationen unter Zugriff auf ein Steuerungssystem (10) des ersten Fahrzeugs (1) erfolgt und/oder
- das Bestimmen (32) der prognostizierten Funktionsgüte unter Zugriff auf Daten erfolgt, die von einem Steuerungssystem (20) des zweiten Fahrzeugs (2) bereitgestellt werden;
**dadurch gekennzeichnet, dass**
die erfassten Informationen empirische Daten über eine mittels des ersten Fahrzeugs (1) erfahrene Funktionsgüte der Fahrerassistenzfunktion umfassen.

2. Verfahren (3) nach Anspruch 1, wobei das Ausgeben (33) der Information über die prognostizierte Funktionsgüte anhand einer grafisch dargestellten Karte erfolgt, welche den Streckenabschnitt (A) umfasst.

3. Verfahren (3) nach einem der vorhergehenden Ansprüche, wobei die Information über die prognostizierte Funktionsgüte eine Prognose umfasst, ob die Fahrerassistenzfunktion in dem Streckenabschnitt (A) verfügbar sein wird.

4. Verfahren (3) nach einem der vorhergehenden Ansprüche, wobei die erfassten Informationen in einem von dem ersten Fahrzeug (1) und von dem zweiten Fahrzeug (2) beabstandeten Backend (6) gespeichert und verarbeitet werden.

5. Verfahren (3) nach einem der vorhergehenden Ansprüche, wobei das Bestimmen (32) der prognostizierten Funktionsgüte unter Berücksichtigung von Informationen erfolgt, die wenigstens ein Element aus der folgenden Auflistung betreffen:
- Einen Fahrbahnverlauf in dem Streckenabschnitt (A);
- Einen Softwarestand des zweiten Fahrzeugs (2);
- Eine Hardware des zweiten Fahrzeugs (2);
- Ein Umfeldmodell, das von dem Steuerungssystem (20) des zweiten Fahrzeugs (2) bereitgestellt wird;
- Mittels einer Umfeldsensorik des zweiten Fahrzeugs (2) erfasste Informationen.

6. Verfahren (3) nach einem der vorhergehenden Ansprüche, wobei eine Information über die prognostizierte Funktionsgüte einem Steuerungssystem (20) des zweiten Fahrzeugs (2) bereitgestellt wird.

7. Verfahren (3) nach einem der vorhergehenden Ansprüche, ferner umfassend:
- Steuern (34) der Fahrerassistenzfunktion des zweiten Fahrzeugs (2) in Abhängigkeit von der prognostizierten Funktionsgüte.

8. Verfahren (3) nach einem der vorhergehenden Ansprüche, ferner umfassend:
- automatisches Deaktivieren der Fahrerassistenzfunktion des zweiten Fahrzeugs (2) vor dem Befahren des Streckenabschnitts (A) falls die Bestimmung (32) ergeben hat, dass die prognostizierte Funktionsgüte nicht ausreicht.

9. System (100) zur Vorhersage einer Funktionsgüte einer Fahrerassistenzfunktion, umfassend:
- eine Recheneinrichtung (61), die eingerichtet ist zum
∘ Empfangen von Informationen, die eine Funktionsgüte einer Fahrerassistenzfunktion kennzeichnen oder für die Funktionsgüte der Fahrerassistenzfunktion relevant sind, wobei die Informationen mittels eines ersten Fahrzeugs (1) erfasst worden sind; und
∘ Bestimmen (32), in Abhängigkeit von den erfassten Informationen, einer für einen Streckenabschnitt (A) prognostizierten Funktionsgüte der Fahrerassistenzfunktion für ein zweites Fahrzeug (2), welches mit dem ersten Fahrzeug (1) identisch oder von diesem verschieden ist; und
- eine Ausgabevorrichtung (21) zum Ausgeben (33) einer Information über die prognostizierte Funktionsgüte in einer für einen Fahrzeuginsassen des zweiten Fahrzeugs (2) wahrnehmbaren Weise;
**dadurch gekennzeichnet, dass**
die empfangenen Informationen empirische Daten über eine mittels des ersten Fahrzeugs (1) erfahrene Funktionsgüte der Fahrerassistenzfunktion umfassen und dass die Recheneinrichtung (61) ausgebildet ist, diese empfangenen Informationen zu verarbeiten.

10. System (100) nach Anspruch 9, wobei das Ausgeben (33) der Information über die prognostizierte Funktionsgüte anhand einer grafisch dargestellten Karte erfolgt, welche den Streckenabschnitt (A) umfasst.

11. System (100) nach Anspruch 9 oder 10, wobei die Information über die prognostizierte Funktionsgüte eine Prognose umfasst, ob die Fahrerassistenzfunktion in dem Streckenabschnitt (A) verfügbar sein wird.

12. System (100) nach einem der Ansprüche 9 bis 11, wobei das Bestimmen (32) der prognostizierten Funktionsgüte unter Berücksichtigung von Informationen erfolgt, die wenigstens ein Element aus der folgenden Auflistung betreffen:
- einen Fahrbahnverlauf in dem Streckenabschnitt (A);
- einen Softwarestand des zweiten Fahrzeugs (2);
- eine Hardware des zweiten Fahrzeugs (2);
- ein Umfeldmodell, das von dem Steuerungssystem (20) des zweiten Fahrzeugs (2) bereitgestellt wird;
- mittels einer Umfeldsensorik des zweiten Fahrzeugs (2) erfasste Informationen.

## Claims

1. Method (3) for predicting the functional quality of a driver assistance function comprising the steps of:
- detecting (31) information by means of a first vehicle (1), said information characterizing the functional quality of a driver assistance function or being relevant to the functional quality of the driver assistance function,
- determining (32), in dependence on the detected information and using a computing device (61), a functional quality of the driver assistance function predicted for a specific route section (A) for a second vehicle (2) which is identical to or different from the first vehicle (1); and
- outputting (33) information relating to the predicted functional quality by means of an output device (21) in a manner which is perceivable to a vehicle occupant of the second vehicle (2);
wherein
- the information is detected (31) by accessing a control system (10) of the first vehicle (1), and/or
- the predicted functional quality is determined (32) by accessing data which are provided by a control system (20) of the second vehicle (2);
**characterized in that**
the detected information comprises empirical data relating to a functional quality of the driver assistance function experienced by means of the first vehicle (1).

2. Method (3) according to Claim 1, wherein the information relating to the predicted functional quality is output (33) by means of a graphically presented map comprising the route section (A).

3. Method (3) according to one of the preceding claims, wherein the information relating to the predicted functional quality comprises a prediction indicating whether the driver assistance function will be available in the route section (A).

4. Method (3) according to one of the preceding claims, wherein the detected information is stored and processed in a backend (6) distanced from the first vehicle (1) and from the second vehicle (2).

5. Method (3) according to one of the preceding claims, wherein the predicted functional quality is determined (32) taking account of information which relates to at least one element from the following list:
- a road layout in the route section (A);
- a software version of the second vehicle (2);
- hardware of the second vehicle (2);
- an environment model which is provided by the control system (20) of the second vehicle (2);
- information detected by means of an environment sensor system of the second vehicle (2).

6. Method (3) according to one of the preceding claims, wherein information relating to the predicted functional quality is provided to a control system (20) of the second vehicle (2).

7. Method (3) according to one of the preceding claims, further comprising:
- controlling (34) the driver assistance function of the second vehicle (2) in dependence on the predicted functional quality.

8. Method (3) according to one of the preceding claims, further comprising:
- automatically deactivating the driver assistance function of the second vehicle (2) before driving along the route section (A) if the determination (32) has revealed that the predicted functional quality is not sufficient.

9. System (100) for predicting the functional quality of a driver assistance function, comprising:
- a computing device (61) which is configured
∘ to receive information which characterizes the functional quality of a driver assistance function or is relevant to the functional quality of the driver assistance function, wherein the information has been detected by means of a first vehicle; and
∘ to determine (32), in dependence on the detected information, a functional quality of the driver assistance function predicted for a route section (A) for a second vehicle (2) which is identical to the first vehicle (1) or differs therefrom; and
- an output device (21) for outputting (33) information relating to the predicted functional quality in a manner perceivable to a vehicle occupant of the second vehicle (2);
**characterized in that**
the received information comprises empirical data relating to a functional quality of the driver assistance function experienced by means of the first vehicle (1) and **in that** the computing device (61) is designed to process this received information.

10. System (100) according to Claim 9, wherein the information relating to the predicted functional quality is output (33) by means of a graphically presented map comprising the route section (A).

11. System (100) according to Claim 9 or 10, wherein the information relating to the predicted functional quality comprises a prediction indicating whether the driver assistance function will be available in the route section (A).

12. System (100) according to one of Claims 9 to 11, wherein the predicted functional quality is determined (32) taking account of information which relates to at least one element from the following list:
- a road layout in the route section (A);
- a software version of the second vehicle (2);
- hardware of the second vehicle (2);
- an environment model which is provided by the control system (20) of the second vehicle (2);
- information detected by means of an environment sensor system of the second vehicle (2).

## Revendications

1. Procédé (3) de prédiction de la qualité fonctionnelle d'une fonction d'aide à la conduite, ledit procédé comprenant les étapes suivantes :
- acquérir (31), au moyen d'un premier véhicule (1), des informations qui caractérisent une qualité fonctionnelle d'une fonction d'aide à la conduite ou qui sont pertinentes pour la qualité fonctionnelle de la fonction d'aide à la conduite ;
- déterminer (32), en fonction des informations acquises et au moyen d'un dispositif informatique (61), une qualité fonctionnelle de la fonction d'aide à la conduite qui est prédite pour une portion d'itinéraire (A) pour un deuxième véhicule (2), qui est identique au premier véhicule (1) ou différent de celui-ci ; et
- délivrer (33), au moyen d'un dispositif de délivrance (21), une information sur la qualité fonctionnelle prédite d'une manière perceptible par un occupant du deuxième véhicule (2) ;
- l'acquisition (31) des informations étant effectuée par accès à un système de commande (10) du premier véhicule (1) et/ou
- la détermination (32) de la qualité fonctionnelle prédite étant effectuée par accès à des données qui sont fournies par un système de commande (20) du deuxième véhicule (2) ;
**caractérisé en ce que**
les informations acquises comprennent des données empiriques concernant une qualité fonctionnelle de la fonction d'aide à la conduite dont l'expérience est acquise au moyen du premier véhicule (1).

2. Procédé (3) selon la revendication 1, la délivrance (33) des informations concernant la qualité fonctionnelle prédite étant effectuée sur la base d'une carte affichée graphiquement qui comprend la portion d'itinéraire (A).

3. Procédé (3) selon l'une des revendications précédentes, les informations concernant la qualité fonctionnelle prédite comprenant une prévision de la disponibilité de la fonction d'aide à la conduite dans la portion d'itinéraire (A).

4. Procédé (3) selon l'une des revendications précédentes, les informations acquises étant mémorisées et traitées dans un arrière-plan (6) distant du premier véhicule (1) et du deuxième véhicule (2).

5. Procédé (3) selon l'une des revendications précédentes, la détermination (32) de la qualité fonctionnelle prédite étant effectuée avec prise en compte d'informations concernant au moins un élément de la liste suivante :
- un tracé de chaussée dans la portion d'itinéraire (A) ;
- un niveau logiciel du deuxième véhicule (2) ;
- un matériel du deuxième véhicule (2) ;
- un modèle d'environnement fourni par le système de commande (20) du deuxième véhicule (2) ;
- des informations acquises au moyen d'un système de capteurs d'environnement du deuxième véhicule (2).

6. Procédé (3) selon l'une des revendications précédentes, une information concernant la qualité fonctionnelle prédite étant fournie à un système de commande (20) du deuxième véhicule (2).

7. Procédé (3) selon l'une des revendications précédentes, comprenant en outre l'étape suivante :
- commander (34) la fonction d'aide à la conduite du deuxième véhicule (2) en fonction de la qualité fonctionnelle prédite.

8. Procédé (3) selon l'une des revendications précédentes, comprenant en outre l'étape suivante :
- désactiver automatiquement la fonction d'aide à la conduite du deuxième véhicule (2) avant de parcourir la portion d'itinéraire (A) si la détermination (32) a montré que la qualité fonctionnelle prévue n'est pas suffisante.

9. Système (100) de prédiction d'une qualité fonctionnelle d'une fonction d'aide à la conduite, ledit système comprenant :
- un dispositif informatique (61) qui est conçu pour
O recevoir des informations qui caractérisent une qualité fonctionnelle d'une fonction d'aide à la conduite ou qui sont pertinentes pour la qualité fonctionnelle de la fonction d'aide à la conduite, les informations ayant été acquises au moyen d'un premier véhicule (1) ; et
O déterminer (32), en fonction des informations acquises, une qualité fonctionnelle de la fonction d'aide à la conduite, prédite pour une portion d'itinéraire (A), pour un deuxième véhicule (2) qui est identique au premier véhicule (1) ou différent de celui-ci ; et
- un dispositif de délivrance (21) destiné à délivrer (33) une information concernant la qualité fonctionnelle prédite d'une manière perceptible par un occupant du deuxième véhicule (2) ;
**caractérisé en ce que**
les informations reçues comprennent des données empiriques concernant la qualité fonctionnelle de la fonction d'aide à la conduite dont l'expérience est acquise par le premier véhicule (1) et
le dispositif informatique (61) est conçu pour traiter ces informations reçues.

10. Système (100) selon la revendication 9, la délivrance (33) des informations concernant la qualité fonctionnelle prédite étant effectuée sur la base d'une carte affichée graphiquement qui comprend la portion d'itinéraire (A).

11. Système (100) selon la revendication 9 ou 10, l'information concernant la qualité fonctionnelle prédite comprenant une prévision de la disponibilité de la fonction d'aide à la conduite dans la portion d'itinéraire (A).

12. Système (100) selon l'une des revendications 9 à 11, la détermination (32) de la qualité fonctionnelle prédite étant effectuée avec prise en compte d'informations concernant au moins un élément de la liste suivante :
- un tracé de chaussée dans la portion d'itinéraire (A) ;
- un niveau logiciel du deuxième véhicule (2) ;
- un matériel du deuxième véhicule (2) ;
- un modèle d'environnement qui est fourni par le système de commande (20) du deuxième véhicule (2) ;
- des informations acquises au moyen d'un système de capteurs d'environnement du deuxième véhicule (2).
